# EUROPEAN PATENT APPLICATION

(11) **EP 4 122 630 A1**
(43) Date of publication of application: **25.01.2023**
(21) Application number: 21771550.7
(22) Date of filing: 01.03.2021
(51) Int. Cl.: B23D 61/12, B23D 61/02, B23D 65/00, B23Q 11/00, B23Q 17/00, B24C 1/04, B44C 1/22

(54) **SAW BLADE, BAND SAW BLADE, PRODUCTION METHOD FOR SAW BLADE, AND PRODUCTION METHOD FOR BAND SAW BLADE**

(30) Priority: 19.03.2020 JP 2020049269
(71) Applicant: Amada Co., Ltd., Isehara-shi, Kanagawa 259-1196 (JP); Amada Machinery Co., Ltd., Kanagawa 259-1196 (JP)
(72) Inventor: MASUDA Yuji, Isehara-shi, Kanagawa 259-1196 (JP); TSUJIMOTO Susumu, Isehara-shi, Kanagawa 259-1196 (JP)
(74) Representative: Grünecker Patent- und Rechtsanwälte PartG mbB
(86) International application number: PCT/JP2021/007613
(87) International publication number: WO 2021/187065

(57) **Abstract**

A band saw blade (1P) includes a body part (11) made into a loop in an endless form at a joint part (M) formed by welding, a blade part (12) formed on one edge side of the body part (11), a first shot blasted part (21) formed on at least one side plane of the body part (11), a second shot blasted part (23) formed in a part of the first shot blasted part (21) and visually recognized as a range having a surface state different from a surface state of the first shot blasted part (21), and an information part (24) that is provided to the second shot blasted part (23) and from which information can be acquired.

## Description

### Technical Field

The present disclosure relates to a saw blade and a band saw blade each including, on the surface of a body part thereof, an information part from which information can be visually acquired, and a manufacturing method for the saw blade and a manufacturing method for the band saw blade.

### Background Art

Patent Literature 1 describes a band saw blade in which a mark is provided on the surface of a body part thereof, and a saw machine in which the band saw blade is used. The mark functions as an information part from which, for example, information for identifying the band saw blade can be visually acquired.

The saw machine described in Patent Literature 1 includes a saw blade guide that guides the traveling of the band saw blade in which the mark is provided on the surface of the body part. While the saw blade guide is arranged close to the surface of the body part to guide the traveling, the saw blade guide includes a recessed part so that a contact with the mark is avoided.

As a result, in the band saw blade, the mark will not be scraped by being rubbed against the saw blade guide during traveling, which makes it possible to prevent a problem that information becomes unable to be acquired from the mark over time.

### Citation List

### Patent Literature

Patent Literature 1: Japanese Patent No. 3454846

### Summary

In order to utilize the disclosure of Patent Literature 1, it is necessary to retrofit saw blade guides that do not include recessed parts, which are attached to a large number of saw machines operating at the processing site, by being replaced with saw blade guides that include recessed parts. However, the retrofit imposes a heavy burden on a user in terms of cost and man-hours.

Therefore, a problem addressed by one aspect of the present invention is that the saw machine or an operator becomes unable to acquire information provided to the information part of the saw blade due to a friction or the like between the saw blade guide and the saw blade caused by the use of the saw blade.

One aspect of the present invention includes the following configurations and procedures.
1) A saw blade including a body part, a blade part formed on one edge side of the body part, a first shot blasted part formed on at least one side plane of the body part, a second shot blasted part formed in a part of the first shot blasted part and visually recognized as a range having a surface state different from a surface state of the first shot blasted part, and an information part that is provided to the second shot blasted part and from which information can be acquired.
2) The saw blade according to 1), in which the information is identification information for identifying the saw blade, and the identification information can be visually acquired from the information part.
3) A band saw blade including a body part made into a loop in an endless form at a joint part formed by welding, a blade part formed on one edge side of the body part, a first shot blasted part formed on at least one side plane of the body part, a second shot blasted part formed in a part of the first shot blasted part and visually recognized as a range having a surface state different from a surface state of the first shot blasted part, and an information part that is provided to the second shot blasted part and from which information can be acquired.
4) A band saw blade including a body part made into a loop in an endless form at a joint part formed by welding, a blade part formed on one edge side of the body part, a shot blasted part, on a side plane of the body part, formed in a predetermined range including the joint part and including a surface rougher than a surface of another range, and an information part that is provided to the shot blasted part and from which information can be acquired.
5) The band saw blade according to 4), in which the surface of the predetermined range is scooped out with respect to the surface of the other range.
6) The band saw blade according to any one of 3) to 5), in which the information is identification information for identifying the band saw blade, and the identification information can be visually acquired from the information part.
7) A manufacturing method for a saw blade, including forming a shot blasted part by a first shot blasting on at least one side plane of a body part of a saw blade material including the body part and a blade part formed on one edge side of the body part, forming a shot blasting overlapped part by a second shot blasting in a desired range of the formed shot blasted part, and forming an information part by providing, to the shot blasting overlapped part, an information part from which information can be acquired.
8) The manufacturing method for a saw blade according to 7), further including forming an oil coated film obtained by applying a rust preventive oil to the at least one side plane of the body part during a period other than a period during which the shot blasting overlapped part is formed and the information part is formed.
9) A manufacturing method for a band saw blade, including forming a shot blasted part by a first shot blasting on at least one side plane of a body part of a saw blade material including the body part and a blade part formed on one edge side of the body part, forming a shot blasting overlapped part by a second shot blasting in a desired range of the formed shot blasted part, forming an information part by providing, to the shot blasting overlapped part, an information part from which information can be acquired, and making the saw blade material into a loop in an endless form so as to form a band saw blade shape before the shot blasting overlapped part is formed or after the information part is formed.
10) The manufacturing method for a band saw blade according to 9), further including forming an oil coated film obtained by applying a rust preventive oil on the at least one side plane of the body part during a period other than a period during which the shot blasting overlapped part is formed and the information part is formed.
11) A manufacturing method for a band saw blade, including welding ends of a saw blade material to each other to make a loop in an endless form, the saw blade material including a body part and a blade part formed on one edge side of the body part, polishing a predetermined range on a side plane of the body part, the predetermined range including the joint part welded in making the loop, forming a shot blasted part by a shot blasting within the predetermined range, and forming an information part by providing, to the shot blasted part, an information part from which information can be acquired.
12) The manufacturing method for a band saw blade according to 11), further including forming an oil coated film obtained by applying a rust preventive oil on the side plane of the body part before the shot blasted part is formed or after the information part is formed.
13) The manufacturing method for a saw blade according to 7) or 8), in which the information part is formed by providing the information part by way of printing with an ink.
14) The manufacturing method for a band saw blade according to any one of 9) to 12), in which the information part is formed by providing the information part by way of printing with an ink.
15) The manufacturing method for a saw blade according to any one of 7), 8), and 13), in which the information is identification information for identifying the saw blade, and the identification information can be visually acquired from the information part.
16) The manufacturing method for a band saw blade according to any one of 9) to 12) and 14), in which the information is identification information for identifying the band saw blade, and the identification information can be visually acquired from the information part.

According to the saw blade and the band saw blade and/or the saw blade manufacturing method and the band saw blade manufacturing method of the present invention, an effect can be obtained in which the saw machine or the operator can maintain a state of being able to acquire information from the information part on the surface of the saw blade without retrofitting the saw machine.

### Brief Description of Drawings

[Figure 1] Figure 1 is a perspective view showing a coil material 1C of a saw blade material 1, which is a material of a band saw blade 1P that is a first embodiment of a band saw blade according to one aspect of the present invention.
[Figure 2] Figure 2 is a partial plan view showing the saw blade material 1.
[Figure 3] Figure 3 is a partial plan view showing a state in which a shot blasted part 21 is formed on the saw blade material 1.
[Figure 4] Figure 4 is a partial plan view showing a state in which a rust preventive oil 22 is applied to the saw blade material 1 on which the shot blasted part 21 shown in Figure 3 is formed.
[Figure 5] Figure 5 is a partial plan view showing a state in which a shot blasting overlapped part 23 is formed on the saw blade material 1 shown in Figure 4 to which the rust preventive oil 22 is applied.
[Figure 6] Figure 6 is a cross-sectional view at positions from S6 to S6 in Figure 5.
[Figure 7] Figure 7 is a partial plan view showing the band saw blade 1P in which a mark 24, which is an information part, is provided to the shot blasting overlapped part 23 shown in Figure 5.
[Figure 8] Figure 8 is a cross-sectional view at positions from S8 to S8 in Figure 7.
[Figure 9] Figure 9 is a partial cross-sectional view showing a band saw blade 1P1 of a second embodiment.
[Figure 10] Figure 10 is a partial cross-sectional view showing a band saw blade 1P2 of a third embodiment.
[Figure 11] Figure 11 is a procedural diagram showing up to the manufacturing of a loop base material 1R in the intermediate stage of the manufacturing method for a band saw blade 1P3 of a fourth embodiment.
[Figure 12] Figure 12 is a cross-sectional view at positions from S12 to S12 of the loop base material 1R shown in (f) of Figure 11.
[Figure 13] Figure 13 is a cross-sectional view showing a band saw blade 1R1 of a fifth embodiment in which a mark 261, which is an information part, is provided to the loop base material 1R.
[Figure 14] Figure 14 is a cross-sectional view showing a band saw blade 1R2 of a sixth embodiment in which marks 261 and 262, which are information parts, are provided to the loop base material 1R.
[Figure 15] Figure 15 is a partial plan view of the band saw blade 1R1 that shows the mark 261.
[Figure 16] Figure 16 is a partial plan view showing a state in which the rust preventive oil 22 is applied to the band saw blade 1R1.

### Description of Embodiments

Embodiments of a band saw blade according to one aspect of the present invention will be described by using band saw blades 1P, 1P1, 1P2, 1R1, and 1R2 of first to fifth embodiments, respectively.

### (First Embodiment)

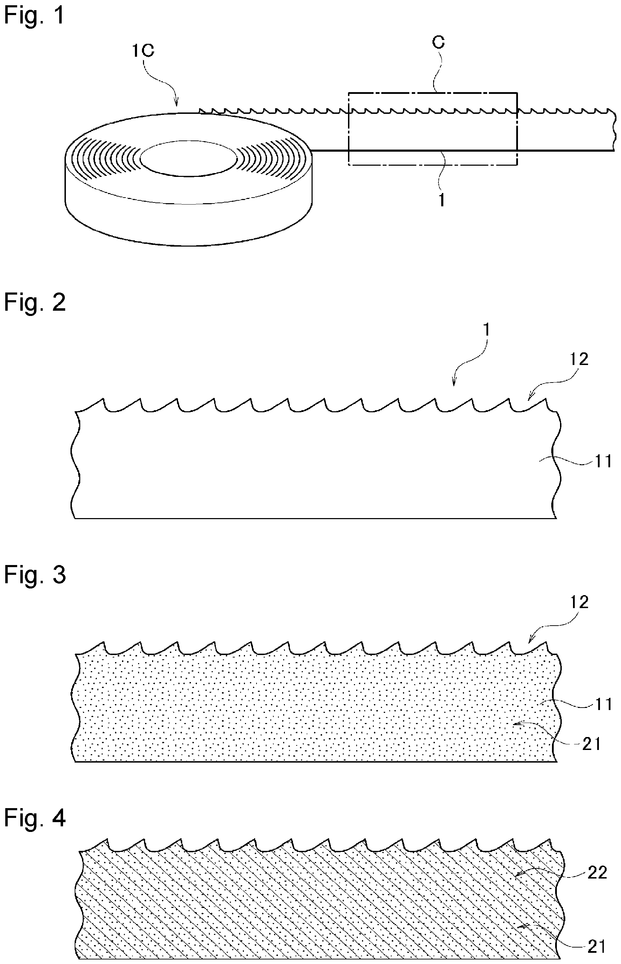

The band saw blade of the first embodiment is the band saw blade 1P, which can be manufactured by the following exemplary manufacturing method described with reference to Figures 1 to 8.

Figure 1 is a perspective view showing a coil material 1C of a saw blade material 1, which is a material of the band saw blade 1P that is the first embodiment of the band saw blade according to the present embodiment. The band saw blade 1P is manufactured from, for example, the coil material 1C of the saw blade material 1 as shown in Figure 1.

Figure 2 is an enlarged view of a C portion in the saw blade material 1 shown in Figure 1. As shown in Figure 2, the saw blade material 1 includes a body part 11 that is a band-shaped member formed of high-speed steel or the like, and a blade part 12 formed on one edge side of the body part 11.

First, as shown in Figure 3, both side planes of the saw blade material 1 are roughened by a first shot blasting, which is the shot blasting performed for the first time, to form a shot blasted part 21 that is a first shot blasted part. The first shot blasting is referred to as shot blasted part formation. In Figure 3, the shot blasted part 21 is shown by using fine dots.

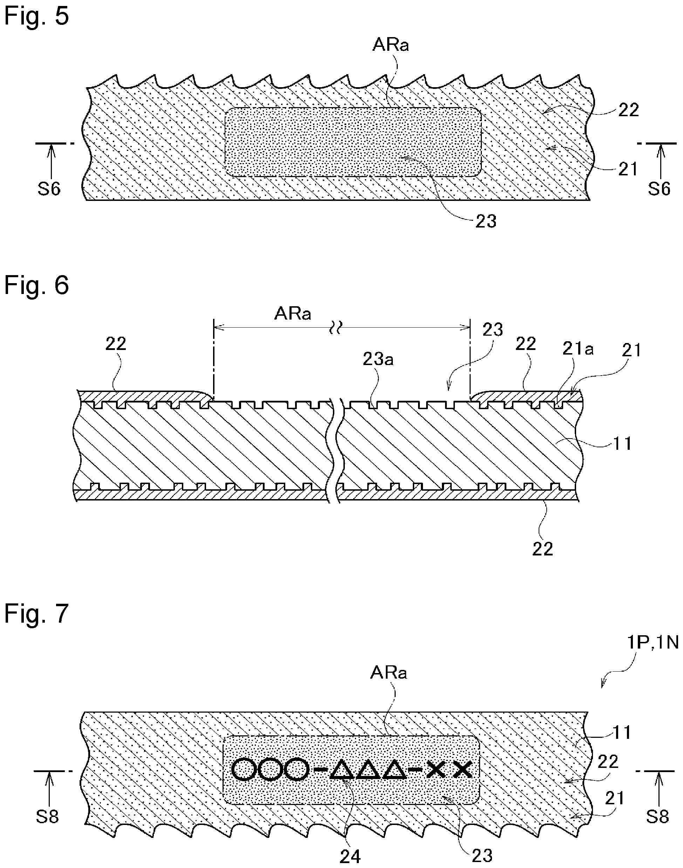

A large number of recessed parts 21a (see Figure 6) are formed in the shot blasted part 21. As a result, the shot blasted part 21 has, for example, a rough surface having an arithmetic mean roughness Ra of about 4 µm. By forming the shot blasted part 21, the mechanical properties of the saw blade material 1 are improved. For example, fatigue strength is increased.

Next, as shown in Figure 4, a rust preventive oil 22 is applied to both side planes of the body part 11. Since the shot blasted part 21 is formed into a new surface and thus is prone to rust, the rust preventive oil 22 is applied to prevent the occurrence of rust.

Next, as shown in Figure 5, masking is performed so that a shot blasting is not applied to a range other than a desired range ARa, and then a second shot blasting, which is the shot blasting performed for the second time, is performed to the range ARa.

The second shot blasting is referred to as shot blasting overlapped part formation. By forming the shot blasting overlapped part, a shot blasting overlapped part 23, which is a second shot blasted part, is formed in the range ARa.

In Figure 5, the shot blasting overlapped part 23 is shown by using fine dots whose density is higher than the density of those of the shot blasted part 21. The range ARa is set to include a range to which a mark 24, which will be described later, is provided. For example, the range ARa is set to a part other than the vicinity of a joint part at which the saw blade material 1 is made into a loop and the ends thereof are welded to each other to form a band saw blade.

Figure 6 is a cross-sectional view at positions from S6 to S6 in Figure 5. In other words, Figure 6 shows a cross section of the saw blade material 1 in which the shot blasting overlapped part 23 is formed in the range ARa on one side plane of the body part 11.

The shot blasting overlapped part 23 is in a state in which the rust preventive oil 22 and dust adhering to the surface thereof have been removed by the second shot blasting.

With respect to the shot blasted part 21, the shot blasting overlapped part 23 has, for example, a rough surface of a new surface in which recessed parts 23a are formed more densely than the recessed parts 21a with the same arithmetic average roughness Ra.

With respect to the shot blasted part 21, the shot blasting overlapped part 23 has a different degree of light reflection and glossiness due to the difference in density of the recessed parts, and thus is visually recognized as a range having a different surface state.

The type and degree of the shot blasting applied to the side plane of the body 11 is not limited. For example, any second shot blasting may be performed as long as the rust preventive oil 22 and dust adhering to the surface of the side plane are removed to make the uneven state of the surface denser.

After the shot blasting overlapped part 23 is formed on the range ARa on the one side plane of the body part 11 as shown in Figures 5 and 6, the mark 24 is printed on the range ARa as shown in Figure 7. Specifically, a printing device causes an ink to adhere, in the shape of the predetermined mark 24, to a desired position within the shot blasting overlapped part 23. The treatment of adhering the mark 24 is referred to as information part formation.

The saw blade material 1 is provided with the mark 24, and is made into a loop in an endless form by way of welding by which the ends thereof are jointed to each other for making a loop, so as to become the band saw blade 1P. Further, after the saw blade material 1 is provided with the mark 24 to form the band saw blade 1P, the rust preventive oil 22 is applied to the range ARa. Oil coated film formation, which is the application of the rust preventive oil 22, is carried out during a period other than a period from forming the shot blasting overlapped part 23 to providing the mark.

The mark 24 is an information part from which information, such as identification information for identifying the type, physical properties, material, application, and the like of the band saw blade to be manufactured, can be visually acquired in a direct or indirect manner. Specifically, the mark 24 is a character, a symbol, a pattern, a one-dimensional or two-dimensional code, or the like.

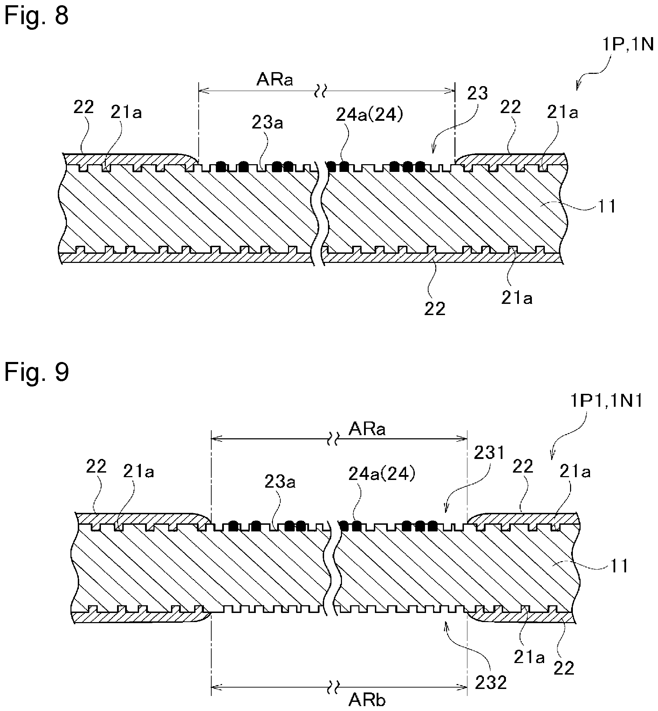

Figure 8 is a cross-sectional view at positions from S8 to S8 in Figure 7.

As shown in Figure 8, no oil or dust adheres to the surface of the area ARa in which the shot blasting overlapped part 23 is formed.

Therefore, the printing operation of the printing device causes an ink 24a to satisfactorily enter inside of the recessed parts 23a in a part corresponding to the mark 24, and thus is maintained with a high degree of adhesion.

In other words, in the band saw blade 1P, the mark 24, which is the information part, is printed with a high degree of adhesion to the shot blasting overlapped part 23 in which the oil and dust have been removed by performing the shot blasting a plurality of times to make the unevenness denser than the other parts.

Therefore, even when the band saw blade 1P is used in a band saw, travels while passing through a saw blade guide, and repeats the cutting process, the mark 24 is less likely to disappear compared with a case in which the mark 24 is printed in a state in which the oil or the dust adheres. Further, the mark 24 is less likely to disappear compared with a case in which the mark 24 is printed on the shot blasted part 21 to which the shot blasting is applied once.

Further, since the range ARa provided with the mark 24, which is the information part, is the shot blasting overlapped part 23 in which the shot blasting is executed a plurality of times, a part in the vicinity of the surface in the surface direction and in the thickness direction is harder than that of the shot blasted part 21 that is a part in which the shot blasting is executed once.

Therefore, when the band saw blade 1P is set in the band saw machine and is travelling, the shot blasting overlapped part 23 is particularly less likely to be scrapped even if the saw blade guide comes into contact with the side plane of the body part 11.

As a result, the mark 24, which is the information part provided to the shot blasting overlapped part 23, is less likely to disappear, and the problem that the information becomes unable to be acquired from the mark 24 over time is less likely to occur.

The first embodiment may be a simple band-shaped saw blade 1N that is not made into a loop in an endless form (see Figures 7 and 8). For example, the first embodiment may be a saw blade for a reciprocating saw.

### (Second Embodiment)

Figure 9 is a cross-sectional view of the band saw blade 1P1 of the second embodiment.

As shown in Figure 9, with respect to the band saw blade 1P of the first embodiment, in the band saw blade 1P1, the shot blasting overlapped parts 23 are formed as shot blasting overlapped parts 231 and 232 on both side planes of the body part 11, and the mark 24 is provided as a mark 241 only to the shot blasting overlapped part 231 of one side.

Specifically, in the band saw blade 1P1, the shot blasting overlapped part 231 is formed in the range ARa of one surface of the body part 11, and the shot blasting overlapped part 232 is formed in the range ARb of the other surface. The second embodiment may be a simple band-shaped saw blade 1N1 that is not made into a loop in an endless form (see Figure 9). For example, the second embodiment may be a saw blade for a reciprocating saw.

In the band saw blade 1P of the first embodiment, the shot blasting overlapped part 23 is formed only on the surface of one side.

Therefore, residual stress generated by the shot blasting is larger on the side on which the shot blasting overlapped part 23 is formed than on a side on which the shot blasting overlapped part 23 is not formed. Thus, strictly speaking, as the band saw blade 1P, the residual stress in the thickness direction in the range Ara is in an unbalanced state.

On the other hand, in the band saw blade 1P1 of the second embodiment, the shot blasting overlapped parts 231 and 232 are formed substantially symmetrically on both surfaces of the body part 11. Therefore, in the range ARa and the range ARb, the residual stress is in a highly balanced state in the thickness direction.

Therefore, in the band saw blade 1P1, even if the cumulative travelling time in the saw machine is long, distortion due to uneven residual stress is less likely to occur, which leads to a long life.

### (Third Embodiment)

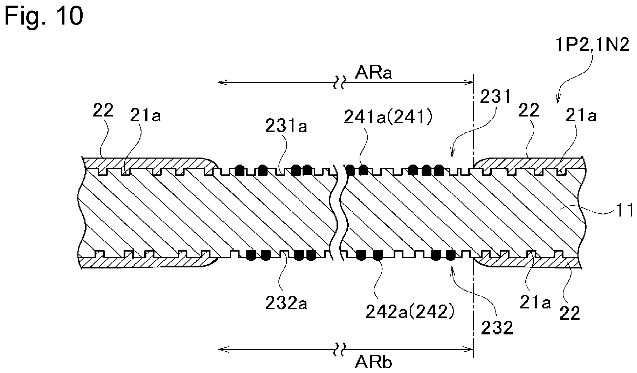

Figure 10 is a cross-sectional view of the band saw blade 1P2 of the third embodiment.

As shown in Figure 10, with respect to the band saw blade 1P1 of the second embodiment, in the band saw blade 1P2, the marks 24, which are the information parts, are provided to the shot blasting overlapped parts 231 and 232 on both sides of the body part 11, respectively, as the marks 241 and 242.

Specifically, a large number of recessed parts 231a are formed by the shot blasting on the shot blasting overlapped part 231, and an ink 241a is maintained in the recessed parts 231a corresponding to the mark 241.

Further, a large number of recessed parts 232a are formed by the shot blasting on the shot blasting overlapped part 232, and an ink 242a is maintained in the recessed parts 232a corresponding to the mark 242.

As a result, even if the band saw blade 1P2 is used for band saw machines each having a different traveling direction to each other, either one of the marks 241 and 242 can be easily visually recognized, which makes handling thereof highly convenient. The third embodiment may be a simple band-shaped saw blade 1N2 that is not made into a loop in an endless form (see Figure 10). For example, the third embodiment may be a saw blade for a reciprocating saw.

### (Fourth Embodiment)

The band saw blades 1P, 1P1, and 1P2 of the first to third embodiments are respectively provided with the marks 24, 241, and 242 each on the side plane not in the vicinity of the joint part at which the saw blade material 1 is made into a loop in an endless form by way of welding. On the other hand, the band saw blade 1R1 of the fourth embodiment includes a mark 261, which is the information part, on a side plane in the vicinity of the joint part including the joined part.

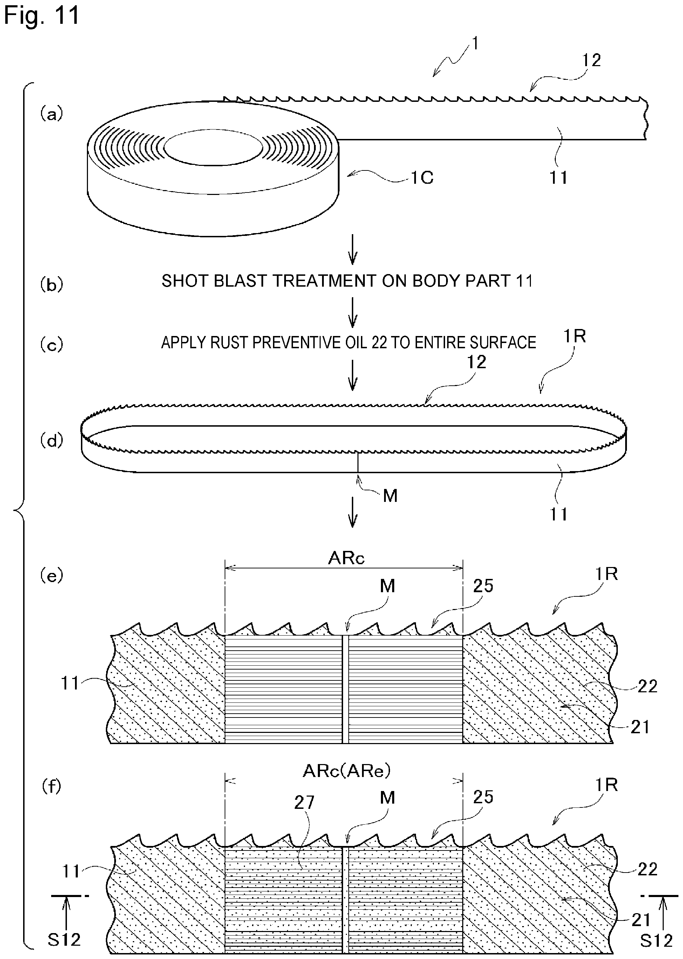

An example of a manufacturing method for the band saw blade 1R1 will be described with reference to Figures 11 to 13.

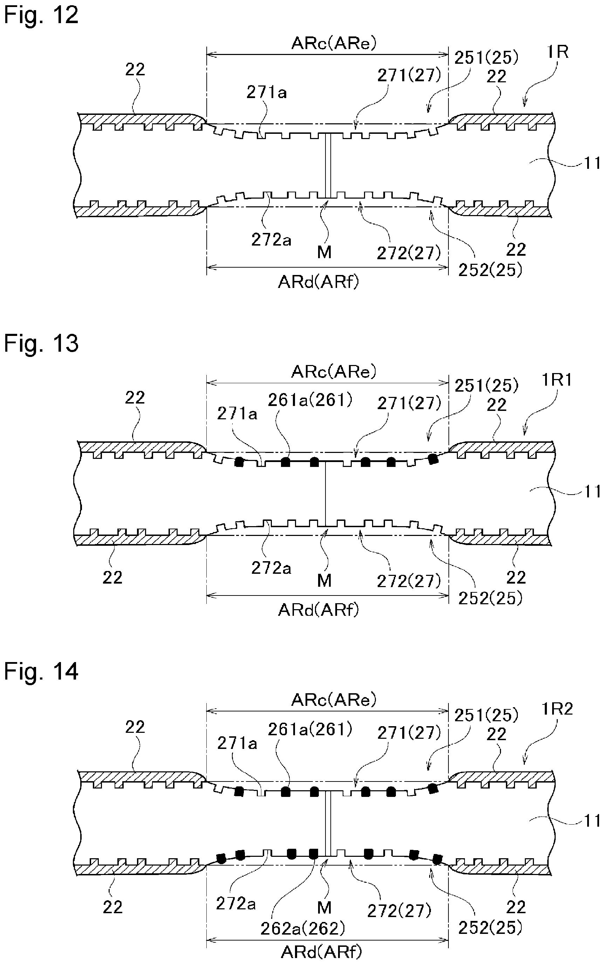

Figure 11 is a procedural diagram showing up to the manufacturing of an endless loop base material 1R in the intermediate stage of the manufacturing method for the band saw blade 1R1. Figure 12 is a cross-sectional view of a joint part M of the endless loop base material 1R and its vicinity. Figure 13 is a cross-sectional view showing a state in which the loop base material 1R is provided with the mark 261, which is the information part, to form the band saw blade 1R1.

As shown in (a) of Figure 11, the band saw blade 1R1 is manufactured from, for example, the coil material 1C of the saw blade material 1. The saw blade material 1 includes the body part 11 that is a band-shaped member made of high-speed steel or the like, and the blade part 12 that is formed on one edge of the body part 11.

First, with respect to the surface of the saw blade material 1 in a state of being pulled out from the coil material 1C [see (a)] or the saw blade material 1 pulled out from the coil material 1C and cut into a predetermined length, as shown in (b) and (c), (b) the shot blasting is performed, and (c) the rust preventive oil is applied. The saw blade material 1 in the state of being pulled out from the coil material 1C is cut into a predetermined length.

Next, with respect to the saw blade material 1 cut into the predetermined length, pre-welding treatment such as removing a burr generated at the cut end is performed. Then, as shown in (d), welding is performed on the joint part M in which the ends of the saw blade material 1 are abutted to each other, to form the loop base material 1R in a band saw shape including the body part 11 and the blade part 12 that are in an endless loop form.

In (e) of Figure 11, a plan view is shown in which the joint part M of the endless loop base material 1R and the vicinity thereof are shown. As shown in (e), the shot blasted part 21 is formed by the shot blasting on a side plane of the endless loop base material 1R, to which the rust preventive oil 22 is applied.

Next, polishing treatment is performed on a predetermined range ARc in which the joint part M in the endless loop base material 1R is located at a substantially central position in the longitudinal direction in order to smooth the surface by removing a protruded part and the like generated by the butt welding. The polishing treatment is referred to as protruded part polishing, and the area in which the polishing treatment is performed is referred to as a polished part 25.

In (e), the range in which the polished part 25 is formed is indicated by the range ARc in the longitudinal direction with hatching using non-inclined horizontal lines.

The method of the polishing treatment is not limited, and belt polishing is used, for example.

Next, as shown in (f) of Figure 11, the shot blasting is performed, which is the first time for the polished part 25, to at least a range ARe included in the range ARc while masking is performed so that shot blasting is not applied to a range other than the polished part 25.

As a result, a shot blasted part 27 is formed on the entire polished part 25 or a part thereof of the range ARc. The surface on which the shot blasted part 27 is provided becomes a new surface, with the rust preventive oil 22 and dust adhering to the surface being removed. The range ARe on which the shot blasted part 27 is formed is indicated by using fine dots in (f).

Figure 12 is a cross-sectional view at positions from S12 to S12 in (f) of Figure 11.

The polished parts 25 are formed as polished parts 251, and 252, respectively, in substantially corresponding ranges on both sides of the body part 11. With respect to the other parts, the polished parts 251 and 252 are parts that are scooped out due to the polishing processing. The surface shape of the polished parts 251 and 252 is not limited as long as it is a surface that is a recessed part with respect to a surface other than the polished parts 251 and 252.

Shot blasted parts 271 and 272 are formed as shot blasted parts 27 in the polished parts 251 and 252, respectively, to form new surfaces. Further, in the shot blasted parts 271 and 271, the oil and dust adhering to the respective surfaces are also removed with recessed parts 271a and 272a being formed. The shot blasted parts 271 and 272 are formed in such a manner that the arithmetic average roughness Ra and the density of the unevenness are, for example, the same as those of the shot blasted part 21.

In Figure 12, the range ARe in which the shot blasted part 271 is formed is a range that is the same as the range ARc in which the polished part 251 is formed, or is a range included in the range ARc.

A range ARf in which the shot blasted part 272 is formed is a range that is the same as the range ARd in which the polished part 252 is formed, or is a range included in the range ARd.

Next, as shown in Figure 13, the printing machine causes an ink 261a to adhere, in the shape of the predetermined mark 261, only to the polished part 251 in which the shot blasted part 271 including a large number of the recessed parts 271a is formed. In other words, the mark 261 is printed on the range ARc.

The mark 261 is the information part from which, for example, information such as identification information for identifying the type, physical properties, material, application, and the like of the band saw blade to be manufactured can be visually acquired in a direct or indirect manner. Specifically, the mark 261 is a character, a symbol, a pattern, a one-dimensional or two-dimensional code, or the like.

Since the polished part 251 is made into a new surface and the oil and dust are also removed, the ink 261a with which the printing is performed satisfactorily enters the recessed parts 271a of the part corresponding to the mark 261 and is maintained with a high degree of adhesion.

The loop base material 1R is provided with the mark 261 to become the band saw blade 1R1 of the fourth embodiment.

As described above, in the band saw blade 1R1, since the mark 261, which is the information part, is provided to the shot blasted part 271 that is a new surface from which the oil and dust have been removed, the mark 261 has a high degree of adhesion with the recessed parts 271a and is less likely to disappear over time.

As a result, the band saw blade 1R1 can maintain a state in which information can be acquired from the mark 261 for a long period of time.

The polished part 251 is a part that is scooped out deeper than the other parts in the body part 11. Therefore, when the band saw blade 1R1 is mounted on the saw machine and is caused to travel, the saw blade guide is less likely to come into contact with the polished part 251. Even if the saw blade guide comes into contact with the polished part 251 of the travelling band saw blade 1R1, almost no force is applied in the thickness direction.

Therefore, in the band saw blade 1R1, the mark 261 is hardly scraped over time as the band saw blade 1R1 travels, and the state can be maintained in which information can be acquired from the mark 261 for a long period of time.

### (Fifth Embodiment)

Figure 14 is a cross-sectional view of the band saw blade 1R2 of the fifth embodiment.

As shown in Figure 14, the band saw blade 1R2 includes the polished part 251 of the range ARc in which the shot blasted part 271 is formed as the range ARe, and the polished part 252 of the range ARd in which a shot blasted part 272 is formed as a range ARf.

Then, in the band saw blade 1R2, the printing device causes inks 261a and 262a to adhere, in the form of the marks 261 and 262, to the polished parts 251 and 252, respectively.

In other words, in the band saw blade 1R2, the mark 261 is provided to the range ARe and the mark 262 is provided to the range ARf.

As a result, even if the band saw blade 1R2 is used for the band saw machines each having a different traveling direction to each other, either one of the marks 261 and 262 can be easily visually recognized, which makes handling thereof highly convenient.

Further, the marks 261 and 262 of the band saw blade 1R2 are respectively provided to the polished parts 251 and 252, each of which is the part that is scooped out deeper than the other parts of the body part 11.

Therefore, both the marks 261 and 262 of the band saw blade 1R2 are hardly scraped as the band saw blade 1R2 travels, and the state can be maintained in which information can be acquired from the marks 261 and 262 for a long period of time.

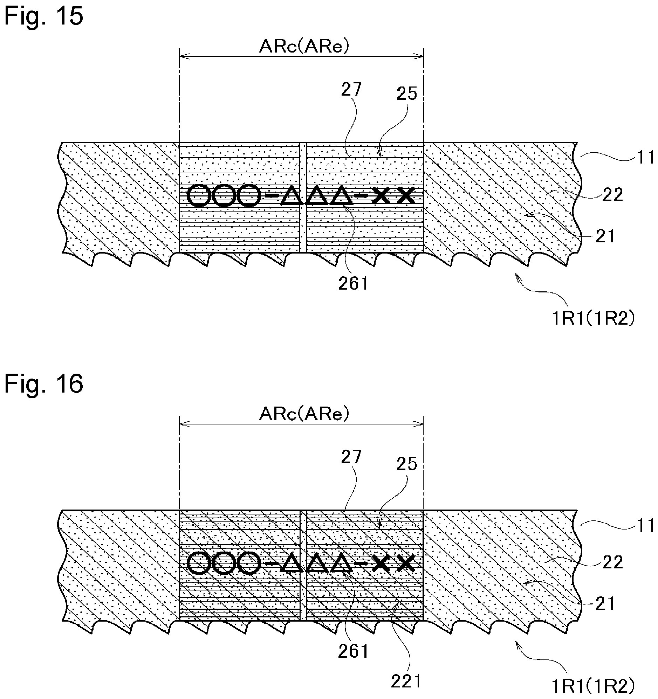

Figure 15 is a plan view of the vicinity of the band saw blade 1R1 or the band saw blade 1R2 including the joint part M.

As shown in Figure 15, the mark 261, which is the information part from which information can be visually acquired, is provided to the shot blasted part 27 formed in the polished part 25.

As shown in Figure 16, the band saw blade 1R1 and the band saw blade 1R2 each including at least the information part of the mark 261 are respectively shipped with the rust preventive oil 221 applied to the polished part 25 thereof.

As described above in detail, in the respective band saw blades 1P, 1P1, 1P2, 1R1, and 1R2 of the first to fifth embodiments and the respective saw blades 1N, 1N1, and 1N2 of the first to third embodiments, the saw machine or the operator can acquire information from the information part provided to the side plane of the body part 11 thereof without retrofitting the saw machine, and the state can be maintained in which information can be acquired for a long period of time.

The embodiments are not limited to the configurations and procedures described above, and may be modified as long as they do not deviate from the summary of the present invention.

Although the mark 24 formed of ink has been described as an example of the information part, the mark 24 is not limited to the one formed of ink and may be provided by another method such as laser marking.

A method of roughening the surface including the polished part 25 of the body part 11 is not limited to the shot blasting. A well-known method of roughening the surface of a metal material can be used.

The mark 261 that is the information part formed on each of the band saw blades 1P, 1P1, and 1P2 of the first to third embodiments can also be applied to a band saw blade in a band shape and a saw blade in a disk shape that is not a saw blade.

In the band saw blades 1P, 1P1, and 1P2 of the first to third embodiments, respectively, the saw blade material 1 can be made into a loop in an endless form before the shot blasting overlapped part 23 is formed or after the marks 24 and 241 are formed.

The disclosure of the present application is related to the subject matter described in Japanese Patent Application No. 2020-049269 filed on March 19, 2020, all of which are incorporated herein by reference.

## Claims

1. A saw blade, comprising:
a body part;
a blade part formed on one edge side of the body part;
a first shot blasted part formed on at least one side plane of the body part;
a second shot blasted part formed in a part of the first shot blasted part and visually recognized as a range having a surface state different from a surface state of the first shot blasted part; and
an information part that is provided to the second shot blasted part and from which information can be acquired.

2. The saw blade according to claim 1, wherein
the information is identification information for identifying the saw blade, and
the identification information can be visually acquired from the information part.

3. A band saw blade, comprising:
a body part made into a loop in an endless form at a joint part formed by welding;
a blade part formed on one edge side of the body part;
a first shot blasted part formed on at least one side plane of the body part;
a second shot blasted part formed in a part of the first shot blasted part and visually recognized as a range having a surface state different from a surface state of the first shot blasted part; and
an information part that is provided to the second shot blasted part and from which information can be acquired.

4. A band saw blade, comprising:
a body part made into a loop in an endless form at a joint part formed by welding;
a blade part formed on one edge side of the body part;
a shot blasted part, on a side plane of the body part, formed in a predetermined range including the joint part and including a surface rougher than a surface of another range; and
an information part that is provided to the shot blasted part and from which information can be acquired.

5. The band saw blade according to claim 4, wherein the surface of the predetermined range is scooped out with respect to the surface of the other range.

6. The band saw blade according to any one of claims 3 to 5, wherein
the information is identification information for identifying the band saw blade, and
the identification information can be visually acquired from the information part.

7. A manufacturing method for a saw blade, comprising:
forming a shot blasted part by a first shot blasting on at least one side plane of a body part of a saw blade material including the body part and a blade part formed on one edge side of the body part;
forming a shot blasting overlapped part by a second shot blasting in a desired range of the formed shot blasted part; and
forming an information part by providing, to the shot blasting overlapped part, an information part from which information can be acquired.

8. The manufacturing method for a saw blade according to claim 7, further comprising forming an oil coated film obtained by applying a rust preventive oil to the at least one side plane of the body part during a period other than a period during which the shot blasting overlapped part is formed and the information part is formed.

9. A manufacturing method for a band saw blade, comprising:
forming a shot blasted part by a first shot blasting on at least one side plane of a body part of a saw blade material including the body part and a blade part formed on one edge side of the body part;
forming a shot blasting overlapped part by a second shot blasting in a desired range of the formed shot blasted part;
forming an information part by providing, to the shot blasting overlapped part, an information part from which information can be acquired; and
making the saw blade material into a loop in an endless form so as to form a band saw blade shape before the shot blasting overlapped part is formed or after the information part is formed.

10. The manufacturing method for a band saw blade according to claim 9, further comprising forming an oil coated film obtained by applying a rust preventive oil on the at least one side plane of the body part during a period other than a period during which the shot blasting overlapped part is formed and the information part is formed.

11. A manufacturing method for a band saw blade, comprising:
welding ends of a saw blade material to each other to make a loop in an endless form, the saw blade material including a body part and a blade part formed on one edge side of the body part;
polishing a predetermined range on a side plane of the body part, the predetermined range including the joint part welded in making the loop;
forming a shot blasted part by a shot blasting within the predetermined range; and
forming an information part by providing, to the shot blasted part, an information part from which information can be acquired.

12. The manufacturing method for a band saw blade according to claim 11, further comprising forming an oil coated film obtained by applying a rust preventive oil on the side plane of the body part before the shot blasted part is formed or after the information part is formed.

13. The manufacturing method for a saw blade according to claim 7 or 8, wherein the information part is formed by providing the information part by way of printing with an ink.

14. The manufacturing method for a band saw blade according to any one of claims 9 to 12, wherein the information part is formed by providing the information part by way of printing with an ink.

15. The manufacturing method for a saw blade according to any one of claims 7, 8, and 13, wherein
the information is identification information for identifying the saw blade, and
the identification information can be visually acquired from the information part.

16. The manufacturing method for a band saw blade according to any one of claims 9 to 12 and claim 14, wherein
the information is identification information for identifying the band saw blade, and
the identification information can be visually acquired from the information part.
